# FASCICULE DE BREVET EUROPEEN

(11) **EP 3 831 050 B1**
(45) Date de publication et mention de la délivrance du brevet: **12.10.2022**
(21) Numéro de dépôt: 19762193.1
(22) Date de dépôt: 26.07.2019
(51) Int. Cl.: H04N 5/369, H04N 5/378

(54) **DISPOSITIF D'ECHANTILLONNAGE AMELIORE**
VERBESSERTE PROBENAHMEVORRICHTUNG
IMPROVED SAMPLING DEVICE

(30) Priorité: 27.07.2018 FR 1857053
(43) Date de publication de la demande: 09.06.2021
(73) Titulaire: LYNRED, 91120 Palaiseau (FR)
(72) Inventeur: DECAENS, Gilbert, 38000 Grenoble (FR)
(74) Mandataire: Talbot, Alexandre
(86) Numéro de dépôt international: PCT/FR2019/051861
(87) Numéro de publication internationale: WO 2020/021216

(56) Documents cités:
- US-A1- 2008 273 093
- US-A1- 2012 043 454
- US-A1- 2017 048 475

## Description

### Domaine de l'invention

L'invention est relative à un dispositif d'échantillonnage, à un convertisseur analogique-numérique comportant un tel dispositif d'échantillonnage et à un procédé d'échantillonnage.

### Etat de la technique

Dans de nombreuses activités, une scène est observée par un dispositif de détection qui comporte un photodétecteur. Le photodétecteur reçoit un signal lumineux qu'il transforme en un signal électrique représentatif de la scène observée.

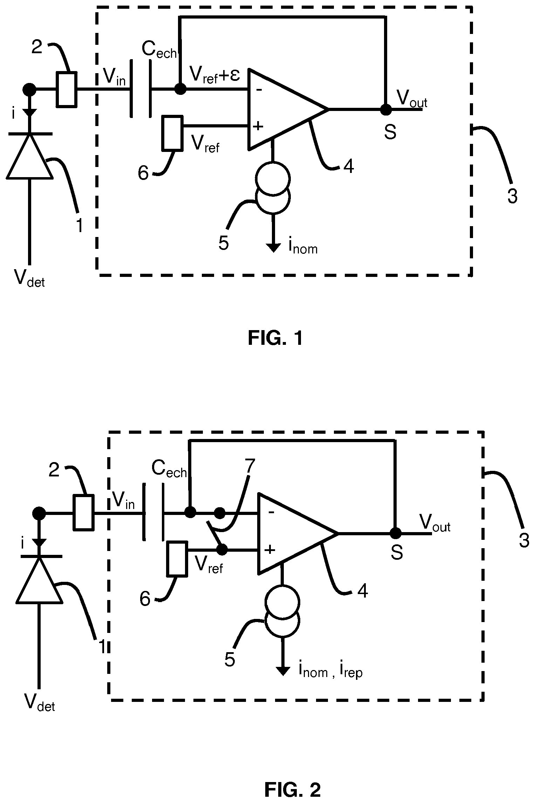

Dans un mode de réalisation conventionnel illustré à la figure 1, le photodétecteur 1 est par exemple une photodiode qui génère un courant représentatif de la luminosité de la scène observée. Le courant émis par le photodétecteur est transformé en une tension Vin qui est représentative de la scène étudiée au moyen d'un circuit de lecture 2. La tension analogique Vin est transformée en un signal numérique au moyen d'un convertisseur analogique-numérique 3. Afin de réaliser la transformation de la tension analogique en un signal numérique, la tension Vin est échantillonnée au moyen d'un dispositif d'échantillonnage qui comporte un condensateur C_{ech} et un amplificateur 4.

L'amplificateur 4 est un dispositif actif qui est configuré pour être opérationnel dans les pires conditions de fonctionnement afin d'apporter une certaine robustesse au dispositif d'échantillonnage. L'amplificateur 4 est donc dimensionné afin d'assurer que les différentes tensions appliquées sur une des bornes du condensateur C_{ech} pourront être échantillonnées dans un délai raisonnable. L'amplificateur 4 est alimenté par une source d'alimentation 5 qui délivre un courant nominal iₙₒₘ.

Or, dans les conditions standards de fonctionnement qui représentent la majorité du temps de fonctionnement du dispositif de détection, les variations de tension aux bornes du condensateur C_{ech} ne correspondent pas aux pires cas ce qui se traduit par une surconsommation chronique du dispositif d'échantillonnage qui se trouve à l'intérieur du convertisseur analogique-numérique 3.

US2017048475 divulgue un appareil d'imagerie comprenant un amplificateur différentiel avec un courant de biais contrôlable. US2012043454 divulgue un circuit d'échantillonnage et de maintien qui comprend un amplificateur avec un courant de biais contrôlable. US2008273093 divulgue un dispositif de détection d'image qui comprend une unité d'amplification avec un courant de biais contrôlable.

### Objet de l'invention

L'invention a pour objet un dispositif d'échantillonnage qui présente une consommation moins importante que les dispositifs d'échantillonnage de l'art antérieur avec des performances équivalentes.

On tend à atteindre ce résultat au moyen d'un dispositif d'échantillonnage comportant :
- un condensateur d'échantillonnage possédant une première borne formant une première entrée du dispositif d'échantillonnage destinée à recevoir un signal à échantillonner et une deuxième borne,
- un amplificateur ayant une première borne d'entrée connectée à la deuxième borne du condensateur d'échantillonnage de manière à échantillonner la tension aux bornes du condensateur d'échantillonnage par rapport à une référence, et une deuxième borne d'entrée connectée à une source (6) de tension de référence.

Le dispositif d'échantillonnage est remarquable en ce que l'amplificateur est alimenté par une source de courant configurée pour :
- délivrer un courant réduit et alimenter l'amplificateur dans une première condition de fonctionnement durant une première période ou ne pas alimenter l'amplificateur durant la première période,
- délivrer un courant nominal et alimenter l'amplificateur dans une deuxième condition de fonctionnement durant une deuxième période postérieure à la première période, la valeur du courant réduit étant inférieure à la valeur du courant nominal et éventuellement nulle.

Le dispositif d'échantillonnage est également remarquable en ce que durant la première période, la deuxième borne du condensateur d'échantillonnage est reliée électriquement à la source de tension de référence.

Dans un développement, la source de courant est formée par:
- une première source d'alimentation configurée pour délivrer le courant réduit et alimenter l'amplificateur dans la première condition de fonctionnement, l'amplificateur est alimenté uniquement par la première source de d'alimentation,
- une deuxième source d'alimentation configurée pour délivrer le courant nominal et alimenter l'amplificateur dans la deuxième condition de fonctionnement, l'amplificateur est alimenté uniquement par la deuxième source de d'alimentation.

Il est également intéressant de prévoir que la source de courant soit formée par :
- une première source d'alimentation configurée pour délivrer le courant réduit et alimenter l'amplificateur dans la première condition de fonctionnement, l'amplificateur est alimenté uniquement par la première source de d'alimentation,
- une deuxième source d'alimentation configurée pour délivrer le courant nominal et alimenter l'amplificateur dans la deuxième condition de fonctionnement, l'amplificateur est alimenté par la deuxième source de d'alimentation et par la première source de d'alimentation.

Dans un cas particulier, la première source d'alimentation est configurée pour délivrer un courant réduit représentant moins de la moitié du courant nominal délivré par la deuxième source d'alimentation.

Dans un autre cas particulier, la source de courant est configurée pour ne pas alimenter l'amplificateur pendant au moins une partie de la première période, la source de courant étant séparée de l'amplificateur par un interrupteur à l'état bloquant.

De manière avantageuse, la source de courant est configurée pour avoir une première période ayant une durée au moins égale à la durée de la deuxième période

Dans un mode de réalisation plus précis, la source de courant est configurée pour avoir une première période ayant une durée au moins égale à deux fois la durée de la deuxième période.

Il est encore possible de prévoir un convertisseur analogique-numérique comportant un dispositif d'échantillonnage selon l'une des modes de réalisation précédents dont la première entrée destinée à recevoir la tension à échantillonner est formée par la première borne du condensateur d'échantillonnage.

L'invention a également pour objet un procédé d'échantillonnage qui est simple à mettre en œuvre et qui permet une réduction de la consommation électrique sans dégradation des performances électriques et temporelles.

Le procédé d'échantillonnage comporte
- fournir une tension à échantillonner sur une première borne d'un condensateur d'échantillonnage, le condensateur d'échantillonnage possédant une deuxième borne reliée à une première borne d'entrée d'un amplificateur, l'amplificateur possédant une deuxième borne d'entrée recevant une tension de référence,
- échantillonner la tension à échantillonner durant une étape d'échantillonnage.

Le procédé d'échantillonnage est remarquable en ce que l'étape d'échantillonnage comporte successivement :
- une première période d'échantillonnage durant laquelle l'amplificateur est alimenté avec un courant réduit de sorte que l'amplificateur fonctionne dans une première condition de fonctionnement,
- une deuxième période d'échantillonnage durant laquelle l'amplificateur est alimenté avec un courant nominal de sorte que l'amplificateur fonctionne dans une deuxième condition de fonctionnement, la valeur du courant réduit étant inférieur à la valeur du courant nominal,
et en ce que durant la première période d'échantillonnage, la deuxième borne du condensateur d'échantillonnage reçoit la tension de référence.

Dans un mode de réalisation particulier, l'amplificateur est alimenté uniquement par une première source de courant durant la première période d'échantillonnage et l'amplificateur est alimenté uniquement par une deuxième source de courant durant la deuxième période d'échantillonnage.

Dans un autre mode de réalisation particulier, l'amplificateur est alimenté uniquement par une première source de courant durant la première période d'échantillonnage et l'amplificateur est alimenté par une deuxième source de courant et par la première source de courant durant la deuxième période d'échantillonnage.

Avantageusement, l'amplificateur n'est pas alimenté durant au moins une partie de la première période d'échantillonnage.

### Description sommaire des dessins

D'autres avantages et caractéristiques ressortiront plus clairement de la description qui va suivre de modes particuliers de réalisation de l'invention donnés à titre d'exemples non limitatifs et représentés aux dessins annexés, dans lesquels :
- la figure 1 représente, de manière schématique, un circuit de détection de l'art antérieur,
- la figure 2 représente, de manière schématique, un premier mode de réalisation d'un circuit de détection,
- la figure 3 représente, de manière schématique, un deuxième mode de réalisation d'un circuit de détection,
- les figures 4 et 5 représentent, de manière schématique, des premières périodes d'échantillonnage selon deux modes de réalisation différents d'un circuit de détection,
- les figures 6 et 7 représentent, de manière schématique, des deuxièmes période d'échantillonnage selon deux modes de réalisation différents d'un circuit de détection.

### Description détaillée

La figure 2 illustre un premier mode de réalisation d'un circuit d'échantillonnage intégré à l'intérieur d'un circuit de détection d'un rayonnement électromagnétique. A titre d'exemple, le circuit d'échantillonnage forme, par exemple, le premier étage d'un convertisseur analogique-numérique 3 ou d'une manière plus générale, le point d'entrée d'une ligne de lecture. Dans un convertisseur analogique-numérique, le circuit d'échantillonnage peut être utilisé dans n'importe quel étage.

Le circuit de détection comporte un photodétecteur 1 qui est préférentiellement une photodiode. Le photodétecteur 1 génère un courant représentatif de la scène observée, c'est-à-dire un premier signal qui est un signal en courant représentatif de la scène observée. Le photodétecteur 1 génère des porteurs de charge en fonction de l'intensité du signal observé. Le photodétecteur 1 peut être configuré pour détecter un rayonnement électromagnétique dans le domaine visible ou dans le domaine infrarouge.

Le circuit de détection comporte également un circuit de lecture 2 qui est configuré pour transformer le courant émis par le photodétecteur 1 en une tension représentative de la scène observée. Le circuit de lecture 2 délivre sur sa borne de sortie un signal en tension qui doit être échantillonné.

Le circuit d'échantillonnage est configuré pour stocker et échantillonner un signal Vin, ici la tension délivrée par le circuit de lecture 2. Le circuit d'échantillonnage reçoit, sur une première borne le signal en tension qui doit être échantillonné. Le signal en tension Vin est, par exemple, appliqué sur une borne d'entrée d'un convertisseur analogique-numérique 3.

Le dispositif d'échantillonnage comporte un amplificateur 4 et un condensateur d'échantillonnage C_{ech}. Le condensateur d'échantillonnage C_{ech} forme la borne d'entrée du dispositif d'échantillonnage, c'est-à-dire qu'il reçoit la tension à échantillonner Vᵢₙ.

Dans le mode de réalisation illustré aux figures 2, 3, 4, 5, 6 et 7, une première armature du condensateur d'échantillonnage C_{ech} est connectée à une borne de sortie du circuit de lecture 2. Dans les modes de réalisation illustrés, la connexion entre le condensateur d'échantillonnage C_{ech} et le circuit de lecture 2 est une connexion directe. Cependant, il est également possible de prévoir une connexion indirecte.

La deuxième borne du condensateur d'échantillonnage C_{ech} est reliée électriquement à une première entrée de l'amplificateur 4. Dans un mode de réalisation particulièrement avantageux, l'amplificateur 4 est monté en suiveur, c'est-à-dire que la première entrée est reliée électriquement avec la borne de sortie de l'amplificateur 4. La borne de sortie délivre la tension de sortie Vₒᵤₜ de l'amplificateur 4. De manière avantageuse, la borne de sortie de l'amplificateur 4 forme la borne de sortie du dispositif d'échantillonnage.

L'amplificateur 4 possède également une deuxième borne d'entrée qui est connectée à une source de tension 6 qui délivre une tension de référence V_{ref}. De cette manière, la deuxième borne d'entrée reçoit la tension de référence V_{ref}. Cependant, l'amplificateur 4 n'étant pas parfait, la première entrée n'applique pas la tension V_{ref} sur l'armature du condensateur C_{ech} mais la tension V_{ref}+ε. Cet écart de tension doit être pris en considération lors des étapes de calcul à suivre afin de le supprimer pour conserver une qualité de conversion acceptable. Par exemple, la tension Vin stockée sur une armature du condensateur C_{ech} est utilisée dans une multiplication, une addition ou une soustraction ou encore dans un transfert sur la borne de sortie de l'amplificateur. Il convient donc d'utiliser la tension la plus proche de ce qui est fourni sur la borne d'entrée, c'est-à-dire la tension Vin.

L'amplificateur 4 étant un dispositif électronique actif, ce dernier est alimenté par une source d'alimentation 5 qui fournit un courant d'alimentation.

Les inventeurs ont observé que durant toute la phase d'échantillonnage, c'est-à-dire durant que la première armature du condensateur C_{ech} se charge au moyen de la tension Vin, la consommation de l'amplificateur 4 peut être relativement importante alors que l'amplificateur 4 ne délivre pas une information pertinente sur sa borne de sortie et à destination de circuits de traitement (non illustrés) qui sont connectés sur la borne de sortie du dispositif d'échantillonnage.

Afin de réduire cette consommation, les inventeurs proposent de moduler les conditions d'alimentation de l'amplificateur 4 dans le temps afin que, sur la durée d'échantillonnage de la tension Vᵢₙ, l'énergie électrique consommée par l'amplificateur 4 soit moins importante qu'un dispositif de l'art antérieur à qualité d'échantillonnage équivalente, c'est-à-dire à durée d'échantillonnage et précision d'échantillonnage constantes.

Il est intéressant de prévoir que l'amplificateur 4 soit alimenté par une source d'alimentation 5 configurée pour délivrer au moins deux courants différents à l'amplificateur 4 afin de le faire fonctionner successivement au moins dans deux conditions différentes durant la durée d'échantillonnage.

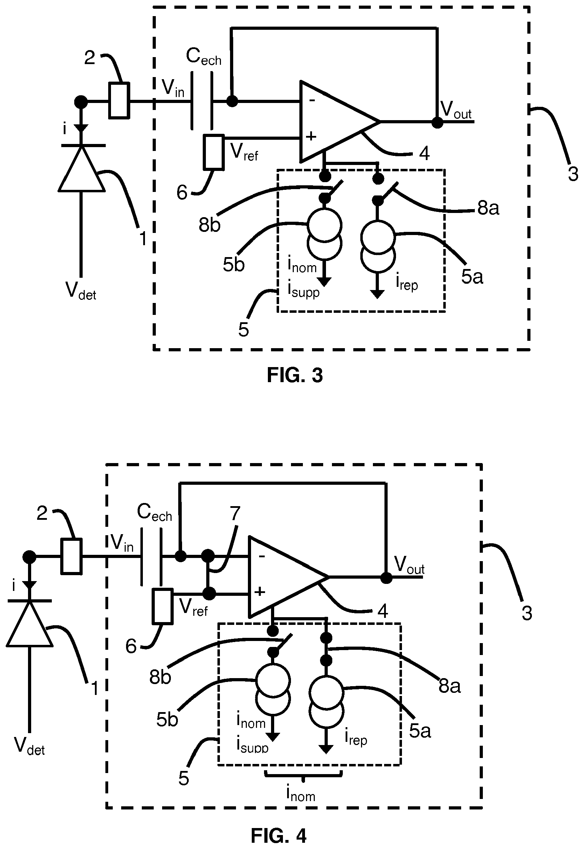

Comme illustré aux figures 3, 4, 5, 6, 7 et 8, cette différence dans l'alimentation de l'amplificateur 4 peut être réalisée en utilisant au moins deux sources de courant différentes à l'intérieur de la source d'alimentation 5.

Durant une première période d'échantillonnage illustrée à la figure 4, la source d'alimentation 5 est configurée pour délivrer un courant réduit iᵣₑₚ et alimenter l'amplificateur 4 pour que ce dernier se trouve dans une première condition de fonctionnement.

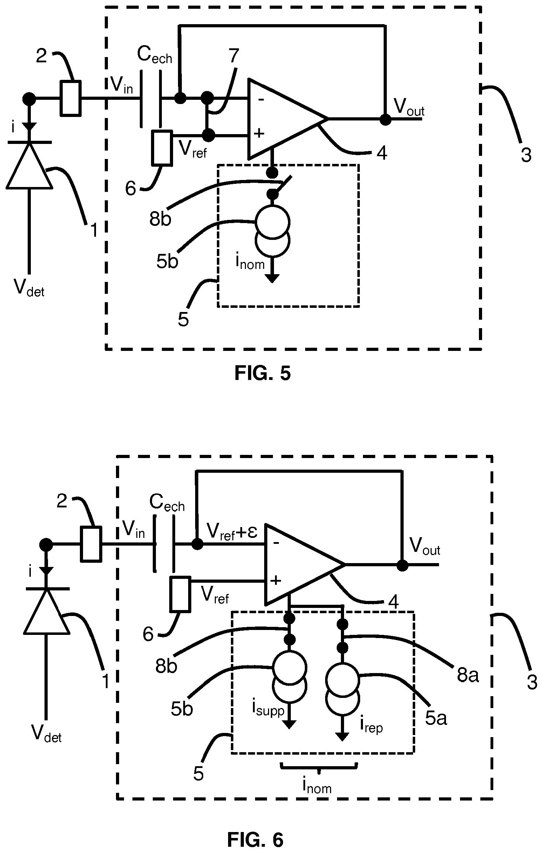

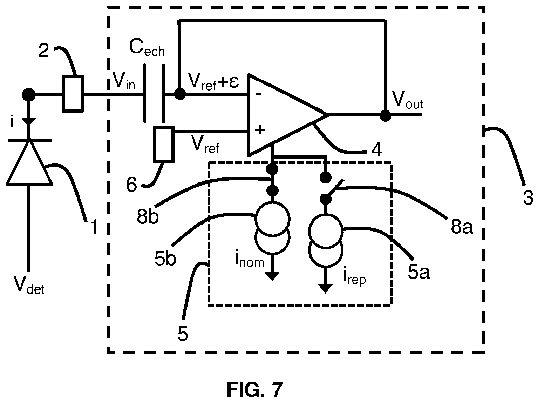

Dans une deuxième période d'échantillonnage postérieure à la première période d'échantillonnage et illustrée aux figures 6 et 7, la source d'alimentation 5 est configurée pour délivrer un courant nominal iₙₒₘ et alimenter l'amplificateur 4 pour que ce dernier se trouve dans une deuxième condition de fonctionnement. La valeur du courant réduit iᵣₑₚ est inférieure à la valeur du courant nominal iₙₒₘ. Dans la deuxième condition de fonctionnement, la première borne d'entrée de l'amplificateur 4 peut délivrer un courant maximal plus important que dans la première condition de fonctionnement.

Durant la première période d'échantillonnage, la deuxième borne du condensateur d'échantillonnage C_{ech} est reliée électriquement à la source 6 de tension de référence V_{ref}. De cette manière, la tension V_{ref} est appliquée sur la deuxième armature du condensateur d'échantillonnage C_{ech} qui peut stocker la tension Vᵢₙ par rapport à la tension V_{ref}. Dans un mode de réalisation, la tension V_{ref} est appliquée sur la première entrée de l'amplificateur 4 en court-circuitant les deux entrées de l'amplificateur 4. Cette configuration est particulièrement avantageuse car compacte. Ce court-circuit peut être réalisé au moyen d'un interrupteur 7 comme cela est illustré aux figures 4 et 5. Le court-circuit permet d'appliquer la tension V_{ref} sur la deuxième armature simplement. En alternative, la deuxième armature du condensateur C_{ech} est déconnectée de la première entrée de l'amplificateur 4. En utilisant un court-circuit entre les deux bornes d'entrée de l'amplificateur 4, il est possible de réduire fortement la consommation de l'amplificateur et de profiter de la source de tension 6 pour charger le condensateur d'échantillonnage C_{ech}.

Durant la première période d'échantillonnage, la tension V_{ref} est appliquée par la source 6 de tension de référence V_{ref} et non par la première entrée de l'amplificateur 4. Le condensateur se charge au moyen du courant apporté par la source 6 de tension de référence V_{ref}. Il est donc possible de réduire l'alimentation délivrée à l'amplificateur 4 sans que cela ne pose des problèmes sur la qualité de l'information présente dans le condensateur d'échantillonnage C_{ech}. Si la tension appliquée sur la deuxième armature du condensateur d'échantillonnage C_{ech} était imposée par l'amplificateur 4, il pourrait y avoir des écarts de polarisation importants car l'amplificateur 4 n'est plus alimenté par le courant nominal iₙₒₘ et n'est pas toujours en mesure d'échantillonner la tension Vᵢₙ. Le courant fourni à l'amplificateur 4 est faible de sorte que l'amplificateur n'est pas en mesure de charger le condensateur d'échantillonnage C_{ech} au niveau souhaité durant la première période et la deuxième période.

Dans un mode de réalisation illustré aux figures 3 et 5, il est même possible de prévoir que l'amplificateur 4 ne soit pas alimenté durant la première période d'échantillonnage ou au moins durant une partie de la première période. Le courant réduit iᵣₑₚ peut être un courant nul et la source de courant 5a peut ne pas exister. Cependant, les inventeurs ont observé que l'absence d'alimentation aux bornes de l'amplificateur 4 peut entrainer des aléas lors de sa remise en fonctionnement. Il apparaît donc avantageux d'utiliser un tel mode de réalisation lorsque la durée d'échantillonnage est importante. Si la première phase d'échantillonnage est réalisée sans alimenter l'amplificateur 4 alors la deuxième phase d'échantillonnage peut être plus longue de sorte que l'amplificateur atteigne un régime stationnaire en fin de deuxième période d'échantillonnage. La figure 3 représente un mode de réalisation qui permet de ne pas alimenter l'amplificateur 4 durant une partie de la première période d'échantillonnage. L'amplificateur 4 est alimenté avec le courant de repos iᵣₑₚ durant l'autre partie de la première période (figure 4). La figure 5 représente un mode de réalisation qui permet de ne pas alimenter l'amplificateur 4 durant toute la première période d'échantillonnage.

Dans une telle configuration, il est particulièrement avantageux de connecter directement la première entrée de l'amplificateur 4 avec la deuxième borne du condensateur d'échantillonnage C_{ech}.

Durant la deuxième période d'échantillonnage illustrée aux figures 6 et 7, la source de tension de référence V_{ref} n'est pas connectée directement à la deuxième armature du condensateur d'échantillonnage C_{ech}. L'interrupteur 7 est à l'état ouvert ou bloquant.

Durant la deuxième période d'échantillonnage, le condensateur d'échantillonnage C_{ech} termine de se charger pour stocker la tension Vin. La tension V_{ref}+ε est appliquée sur la seconde borne du condensateur d'échantillonnage C_{ech} au moyen de la première entrée de l'amplificateur 4. L'écart à la tension de référence V_{ref} est présent sur la deuxième borne du condensateur C_{ech} ce qui permet d'utiliser la tension stockée sur la première armature du condensateur facilement dans les opérations courantes d'un circuit d'échantillonnage. Cette configuration évite d'introduire un décalage de tension égal à ε dans le résultat de sortie et donc de devoir traiter le signal avec des algorithmes supplémentaires dans les traitements postérieurs.

Durant la deuxième période d'échantillonnage, l'amplificateur 4 est alimenté avantageusement avec un courant nominal iₙₒₘ qui est plus important que le courant réduit iᵣₑₚ ce qui permet de fournir rapidement les charges permettent de passer de la tension V_{ref} à la tension V_{ref}+ε. Il est donc possible d'avoir une deuxième phase d'échantillonnage courte.

En utilisant la première entrée de l'amplificateur 4 pour appliquer la tension de référence V_{ref}+ε sur la deuxième borne du condensateur d'échantillonnage C_{ech}, le décalage de tension qui existe entre les première et deuxième entrées de l'amplificateur (également appelé offset d'amplificateur) est introduit dans la mesure échantillonnée ce qui facilite le traitement de l'information en stockant une erreur liée à l'amplificateur pour permettre l'élimination de cette erreur lors de l'utilisation suivante de l'amplificateur.

La deuxième période d'échantillonnage illustrée aux figures 6 et 7 représente un fonctionnement du dispositif d'échantillonnage comme dans l'art antérieur avec la tension à échantillonner Vᵢₙ qui est mesurée par l'amplificateur 4 dans ses conditions nominales d'alimentation. Le schéma électrique équivalent correspond alors à celui de la figure 1.

Dans le mode de réalisation illustré à la figure 6, les sources de courant 5a et 5b sont connectées simultanément à l'amplificateur 4 afin que ce dernier soit alimenté avec le courant nominal iₙₒₘ. Dans le mode de réalisation illustré à la figure 7, seule la source de courant 5b est connectée à l'amplificateur 4 afin que ce dernier soit alimenté avec le courant nominal iₙₒₘ.

En utilisant, deux conditions différentes d'alimentation de l'amplificateur 4, le dispositif d'échantillonnage consomme moins de courant qu'un dispositif de l'art antérieur sur la durée totale d'échantillonnage. Cette configuration permet de conserver les mêmes fréquences d'échantillonnage que celles des dispositifs de l'art antérieur. La deuxième période d'échantillonnage est réalisée avantageusement avec le courant nominal, c'est-à-dire le courant d'alimentation prévu pour un fonctionnement standard voire optimal de l'amplificateur 4 pour charger faiblement le condensateur C_{ech}.

Afin d'avoir un gain en consommation de courant le plus important possible, il est avantageux de réduire autant que possible la valeur du courant réduit iᵣₑₚ et/ou la durée de la deuxième période d'échantillonnage vis-à-vis de la durée totale d'échantillonnage. De manière avantageuse, la durée de la première période d'échantillonnage est égale à au moins 10% de la durée totale d'échantillonnage, de préférence au moins 50% de la durée totale d'échantillonnage.

Les inventeurs ont observé un gain notable en consommation de courant sans perte de performance lorsque la durée de la première période d'échantillonnage est égale à la durée de la deuxième période d'échantillonnage. De très bons résultats sont également attendus lorsque la première période d'échantillonnage représente une durée supérieure à celle de la deuxième période d'échantillonnage, c'est-à-dire que la première période d'échantillonnage représente plus de la moitié de la durée d'échantillonnage. En d'autres termes, la source d'alimentation 5 peut être configurée pour avoir une première période d'échantillonnage ayant une durée au moins égale à la deuxième période d'échantillonnage. De manière avantageuse, la source d'alimentation 5 est configurée pour avoir une première période d'échantillonnage ayant une durée au moins égale à deux fois la durée de la deuxième période d'échantillonnage. Cette configuration permet aussi d'obtenir des bons résultats lorsque la durée de la première période d'échantillonnage est comprise entre 80% et 90% de la durée totale d'échantillonnage.

De manière avantageuse, la deuxième période est au moins égale à 10% de la durée de la première période d'échantillonnage pour s'assurer que la première borne d'entrée de l'amplificateur 4 délivre la tension V_{ref}+ε.

Il est avantageux de prévoir que la valeur du courant réduit iᵣₑₚ représente moins de 80% de la valeur du courant nominal iₙₒₘ. Préférentiellement, la valeur du courant réduit iᵣₑₚ représente moins de 50% de la valeur du courant nominal iₙₒₘ et encore plus préférentiellement moins de 30%. Comme indiqué plus haut, il est également possible de prévoir que le courant réduit corresponde à un courant nul.

Il est également possible de prévoir que la première période d'échantillonnage soit divisée en au moins deux périodes élémentaires successives qui correspondent à des conditions d'alimentation différentes.

Il est, par exemple, avantageux de prévoir que la première période élémentaire correspond à une absence de courant d'alimentation aux bornes de l'amplificateur 4 et que la deuxième période élémentaire correspond à une alimentation avec un courant réduit iᵣₑₚ qui représente entre 30% et 50% du courant nominal iₙₒₘ. De cette manière, l'arrêt de l'amplificateur 4 durant la première période élémentaire permet un gain maximal en consommation et la deuxième période élémentaire permet un démarrage maitrisé de l'amplificateur 4 pour éviter des artefacts de mesure. La deuxième période élémentaire est postérieure à la première période élémentaire.

Pour obtenir l'arrêt de l'amplificateur 4, il est possible d'éteindre la source d'alimentation 5, mais il est également possible d'appliquer un faible courant dont la valeur se trouve en dessous de la valeur nécessaire au démarrage de l'amplificateur 4. Ces deux options peuvent être utilisées pour arrêter l'amplificateur 4 durant la première période d'échantillonnage ou une partie de la première période d'échantillonnage. En alternative, il est possible de déconnecter la source d'alimentation 5 de l'amplificateur 4 en basculant à l'état bloquant un interrupteur 8a/8b qui relie la source de courant 5 avec l'amplificateur 4.

La source d'alimentation 5 est avantageusement configurée pour délivrer deux courants différents, le courant réduit iᵣₑₚ et le courant nominal iₙₒₘ. La source d'alimentation 5 peut être formée de différentes manières pour fournir des conditions d'alimentation différentes à l'amplificateur 4 au cours du temps.

Dans une première configuration illustrée aux figures 3 et 4, la source d'alimentation 5 délivre le courant réduit iᵣₑₚ sur une première borne de sortie et elle délivre un courant supplémentaire iₛᵤₚₚ sur une deuxième borne de sortie. Le courant supplémentaire est choisi de manière à ce que la source d'alimentation 5 délivre le courant nominal iₙₒₘ à partir de la première borne de sortie et de la deuxième borne de sortie (iₙₒₘ=iᵣₑₚ+iₛᵤₚₚ).

Ces deux bornes de sortie permettent de dissocier les deux fonctionnements attendus pour l'amplificateur 4 avec deux sources d'alimentations complémentaires pour former le courant nominal iₙₒₘ. Les deux sources d'alimentation sont connectées à l'entrée d'alimentation de l'amplificateur 4 par l'intermédiaire de deux interrupteurs distincts 8a et 8b. Le premier interrupteur 8a relie électriquement l'amplificateur 4 avec la première source d'alimentation 5a qui délivre le courant réduit iᵣₑₚ. Le deuxième interrupteur 8b relie électriquement l'amplificateur 4 avec la deuxième source d'alimentation 5b qui délivre le courant supplémentaire iₛᵤₚₚ.

Durant la première période d'échantillonnage (figure 4), le premier interrupteur 8a est passant afin de délivrer le courant réduit iᵣₑₚ. Durant la deuxième période d'échantillonnage (figure 6), le premier et le deuxième interrupteurs 8a et 8b sont passants afin de délivrer le courant nominal iₙₒₘ.

Dans une deuxième configuration illustrée aux figures 4 et 7, la source d'alimentation 5 délivre le courant réduit iᵣₑₚ sur une première borne de sortie et elle délivre le courant nominal iₙₒₘ sur une deuxième borne de sortie. Ces deux bornes de sortie représentent deux sources d'alimentation spécifiques 5a et 5b délivrant respectivement chacune les courants attendus. Les deux sources d'alimentation spécifiques sont connectées à l'entrée d'alimentation de l'amplificateur 4 par l'intermédiaire de deux interrupteurs distincts 8a et 8b. Le premier interrupteur 8a relie électriquement l'amplificateur 4 avec la première source d'alimentation 5a qui délivre le courant réduit iᵣₑₚ. Le deuxième interrupteur 8b relie électriquement l'amplificateur 4 avec la deuxième source d'alimentation 5b qui délivre le courant nominal iₙₒₘ.

En basculant l'ouverture et la fermeture des premier et deuxième interrupteurs 8a et 8b, il est possible d'alimenter l'amplificateur 4 avec le courant réduit iᵣₑₚ ou avec le courant nominal iₙₒₘ si les deux interrupteurs 8a et 8b sont toujours en opposition d'états durant toute la durée d'échantillonnage. Il est également possible de prévoir que les deux interrupteurs 8a et 8b soient à l'état bloquant simultanément pour provoquer l'arrêt de l'amplificateur 4 (figure 3).

Dans un autre mode de réalisation, la première phase d'échantillonnage est réalisée sans alimenter l'amplificateur 4 (figure 3). Le condensateur C_{ech} se charge entre la tension Vᵢₙ et la tension V_{ref}. Durant la deuxième phase d'échantillonnage, l'amplificateur 4 est alimenté avec le courant de repos Iᵣₑₚ (figure 4). Les inventeurs ont observé que l'utilisation du courant de repos est possible car la différence de tension entre la tension Vref et la tension V_{ref}+ε est faible ce qui permet d'utiliser un amplificateur 4 qui délivre moins de courant. Cependant, des précautions doivent être prises et la durée de la deuxième phase d'échantillonnage peut être augmentée. Lors de l'étape de calcul ou de transfert qui suit l'étape d'échantillonnage, l'amplificateur 4 est alimenté avec le courant nominal iₙₒₘ.

Pour échantillonner la tension Vᵢₙ, la tension Vᵢₙ est appliquée sur la première borne du condensateur d'échantillonnage C_{ech}. La tension est échantillonnée durant une durée d'échantillonnage prédéfinie. La durée d'échantillonnage est décomposée en au moins deux phases d'échantillonnage. Durant la première phase d'échantillonnage, l'amplificateur est alimenté avec le courant réduit ou n'est pas alimenté. Durant la deuxième phase d'échantillonnage, l'amplificateur est alimenté avec le courant qui est supérieur au courant appliqué durant la première phase d'échantillonnage. La tension Vᵢₙ est amenée à changer. Le dispositif d'échantillonnage est configuré pour appliquer plusieurs périodes successives d'échantillonnage pour suivre les variations de la tension Vᵢₙ. La deuxième phase d'échantillonnage est postérieure à la première phase d'échantillonnage dans chaque période d'échantillonnage. De manière avantageuse, la durée de la première phase d'échantillonnage est constante pour les multiples périodes d'échantillonnage. Il en est avantageusement de même pour les multiples deuxièmes phases d'échantillonnage.

Comme illustré sur les figures, la première entrée de l'amplificateur est reliée à la sortie de l'amplificateur par une connexion électrique dépourvue de capacité électrique. En d'autres termes, la connexion électrique reliant l'entrée et la sortie est dépourvue de charge capacitive.

Le circuit d'échantillonnage peut posséder un circuit de commande (non représenté) qui actionne les différents interrupteurs 7, 8a et 8b et éventuellement d'autres éléments de manière à définir la première période d'échantillonnage, la deuxième période d'échantillonnage et les étapes de calcul et de transfert de tension.

Le photodétecteur 1 peut être formé par tout dispositif configuré pour transformer un signal électromagnétique reçu en un courant électrique. A titre d'exemple, le photodétecteur 1 peut être une photodiode, un dispositif à puits quantique ou à multipuits quantiques. Il est encore possible d'utiliser un capteur CMOS comme photodétecteur.

Le photodétecteur 1 peut être réalisé en silicium, dans des matériaux II-VI ou encore dans des matériaux III-V. A titre d'exemple, le photodétecteur peut être réalisé dans des matériaux choisis parmi HgCdTe, InSb ou InGaAs.

Le photodétecteur 1 peut être configuré pour détecter du rayonnement visible et/ou un rayonnement infrarouge.

Le circuit de détection peut être configuré pour fonctionner à température ambiante ou il peut être associé à un dispositif refroidisseur afin de former un circuit de détection refroidi. De manière avantageuse, le circuit de détection refroidi est configuré pour avoir une température de fonctionnement inférieure à 200K.

Le dispositif d'échantillonnage est présenté comme un élément d'un dispositif de détection, mais il est tout à fait possible de prévoir que le dispositif d'échantillonnage puisse être utilisé dans d'autres dispositifs ou circuits, par exemple à l'intérieur d'un convertisseur analogique numérique hors d'un dispositif de détection ou dans une autre structure permettant l'échantillonnage à partir d'un condensateur d'échantillonnage sans faire partie d'un convertisseur analogique-numérique.

De manière avantageuse, le courant nominal correspond au courant minimal pour charger la capacité d'échantillonnage lorsque la tension Vin correspond au pire cas dans la durée d'échantillonnage prédéfinie. Par exemple, la tension Vin correspond à la borne la plus éloignée de la tension initiale présente sur la borne du condensateur d'échantillonnage. Ainsi, durant la période d'échantillonnage du circuit, il faut accumuler la quantité maximale de charges électriques afin d'avoir une information représentative de Vin.

La valeur du courant nominal est fonction de la valeur du condensateur d'échantillonnage ce qui représente, le nombre de charges électriques à stocker. La valeur du courant nominal est également fonction de la valeur de Vin et de la durée d'échantillonnage.

Comme illustré aux figures 1 à 7, il est avantageux de prévoir que l'entrée de l'amplificateur 4 soit reliée à la sortie de l'amplificateur 4 par une connexion dépourvue de charge capacitive.

## Revendications

1. Dispositif d'échantillonnage comportant :
- un condensateur d'échantillonnage (C_{ech}) possédant une première borne formant une première entrée du dispositif d'échantillonnage destinée à recevoir un signal à échantillonner et une deuxième borne,
- un amplificateur (4) ayant une première borne d'entrée connectée à la deuxième borne du condensateur d'échantillonnage (C_{ech}) de manière à échantillonner la tension aux bornes du condensateur d'échantillonnage (C_{ech}) par rapport à une référence, et une deuxième borne d'entrée connectée à une source (6) de tension de référence (V_{ref}),
- une source de courant (5, 5a, 5b) alimentant l'amplificateur (4), la source de courant (5, 5a, 5b) étant configurée pour :
o délivrer un courant réduit (iᵣₑₚ) et alimenter l'amplificateur (4) dans une première condition de fonctionnement durant une première période ou ne pas alimenter l'amplificateur (4) durant la première période,
o délivrer un courant nominal (iₙₒₘ) et alimenter l'amplificateur (4) dans une deuxième condition de fonctionnement durant une deuxième période postérieure à la première période, la valeur du courant réduit (iᵣₑₚ) étant inférieure à la valeur du courant nominal (iₙₒₘ) et éventuellement nulle,
dispositif d'échantillonnage **caractérisé en ce que**, durant la première période, un interrupteur (7) court-circuite la première borne d'entrée avec la deuxième borne d'entrée de l'amplificateur (4) et la source (6) de tension de référence (V_{ref}) applique un courant chargeant la deuxième borne du condensateur d'échantillonnage (4) et **en ce que**, durant la deuxième période, l'interrupteur (7) est à l'état bloquant.

2. Dispositif d'échantillonnage selon la revendication 1, **caractérisé en ce que** la source de courant (5) est formée par :
- une première source d'alimentation (5a) configurée pour délivrer le courant réduit (iᵣₑₚ) et alimenter l'amplificateur (4) dans la première condition de fonctionnement, l'amplificateur (4) est alimenté uniquement par la première source d'alimentation,
- une deuxième source d'alimentation (5b) configurée pour délivrer le courant nominal (iₙₒₘ) et alimenter l'amplificateur (4) dans la deuxième condition de fonctionnement, l'amplificateur (4) est alimenté uniquement par la deuxième source d'alimentation (5b).

3. Dispositif d'échantillonnage selon la revendication 1, **caractérisé en ce que** la source de courant (5) est formée par :
- une première source d'alimentation (5a) configurée pour délivrer le courant réduit (iᵣₑₚ) et alimenter l'amplificateur (4) dans la première condition de fonctionnement, l'amplificateur (4) est alimenté uniquement par la première source d'alimentation (5a),
- une deuxième source d'alimentation (5b) configurée pour délivrer le courant nominal (iₙₒₘ) et alimenter l'amplificateur (4) dans la deuxième condition de fonctionnement, l'amplificateur (4) est alimenté par la deuxième source d'alimentation (5b) et par la première source d'alimentation (5a).

4. Dispositif d'échantillonnage selon l'une quelconque des revendications 1 à 3, **caractérisé en ce que** la première source d'alimentation (5a) est configurée pour délivrer un courant réduit (iᵣₑₚ) représentant moins de la moitié du courant nominal (iₙₒₘ) délivré par la deuxième source d'alimentation (5b).

5. Dispositif d'échantillonnage selon la revendication 1, **caractérisé en ce que** la source de courant (5) est configurée pour ne pas alimenter l'amplificateur (4) pendant au moins une partie de la première période, la source de courant (5) étant séparée de l'amplificateur (4) par un interrupteur (7) à l'état bloquant.

6. Dispositif d'échantillonnage selon l'une des revendications précédentes, **caractérisé en ce que** la source de courant (5) est configurée pour avoir une première période ayant une durée au moins égale à la durée de la deuxième période.

7. Dispositif d'échantillonnage selon la revendication précédente, **caractérisé en ce que** la source de courant (5) est configurée pour avoir une première période ayant une durée au moins égale à deux fois la durée de la deuxième période.

8. Convertisseur analogique-numérique (3) comportant :
- un dispositif d'échantillonnage selon l'une quelconque des revendications précédentes dont la première entrée destinée à recevoir la tension à échantillonner (Vᵢₙ) est formée par la première borne du condensateur d'échantillonnage (C_{ech}).

9. Procédé d'échantillonnage d'une tension comportant :
- fournir une tension à échantillonner (Vᵢₙ) sur une première borne d'un condensateur d'échantillonnage (C_{ech}), le condensateur d'échantillonnage (C_{ech}) possédant une deuxième borne reliée à une première borne d'entrée d'un amplificateur (4), l'amplificateur (4) possédant une deuxième borne d'entrée recevant une tension de référence (V_{ref}),
- échantillonner la tension à échantillonner (Vᵢₙ) durant une étape d'échantillonnage
dans lequel l'étape d'échantillonnage comporte successivement :
- une première période d'échantillonnage durant laquelle l'amplificateur (4) est alimenté avec un courant réduit (iᵣₑₚ) de sorte que l'amplificateur (4) fonctionne dans une première condition de fonctionnement,
- une deuxième période d'échantillonnage durant laquelle l'amplificateur (4) est alimenté avec un courant nominal (iₙₒₘ) de sorte que l'amplificateur fonctionne dans une deuxième condition de fonctionnement, la valeur du courant réduit (iᵣₑₚ) étant inférieur à la valeur du courant nominal (iₙₒₘ),
**caractérisé en ce que** durant la première période d'échantillonnage, la première borne d'entrée et la deuxième borne d'entrée de l'amplificateur (4) sont court-circuitées par un interrupteur (7) de sorte que la source (6) de tension de référence (V_{ref}) applique un courant chargeant le condensateur d'échantillonnage (4) et **en ce que** durant la deuxième période, l'interrupteur (7) est à l'état bloquant de sorte que le condensateur d'échantillonnage (C_{ech}) reçoit un courant depuis la première borne d'entrée de l'amplificateur (4).

10. Procédé d'échantillonnage selon la revendication précédente dans lequel l'amplificateur (4) est alimenté uniquement par une première source de courant (5a) durant la première période d'échantillonnage et l'amplificateur (4) est alimenté uniquement par une deuxième source de courant (5b) durant la deuxième période d'échantillonnage.

11. Procédé d'échantillonnage selon la revendication 9 dans lequel l'amplificateur (4) est alimenté uniquement par une première source de courant (5a) durant la première période d'échantillonnage et l'amplificateur (4) est alimenté par une deuxième source de courant (5b) et par la première source de courant (5a) durant la deuxième période d'échantillonnage.

12. Procédé d'échantillonnage selon la revendication 9 dans lequel l'amplificateur (4) n'est pas alimenté durant au moins une partie de la première période d'échantillonnage.

## Patentansprüche

1. Abtastvorrichtung, umfassend:
- einen Abtastkondensator (C_{ech}) mit einem ersten Anschluss, der einen ersten Eingang der Abtastvorrichtung zum Empfang eines abzutastenden Signals bildet, und einem zweiten Anschluss,
- einen Verstärker (4) mit einem ersten Eingangsanschluss, der mit dem zweiten Anschluss des Abtastkondensators (C_{ech}) verbunden ist, um die Spannung an den Anschlüssen des Abtastkondensators (C_{ech}) in Bezug auf eine Bezugsspannung abzutasten, und einem zweiten Eingangsanschluss, der mit einer Quelle (6) der Bezugsspannung (V_{ref}) verbunden ist,
- eine Stromquelle (5, 5a, 5b), die den Verstärker (4) mit Strom versorgt, wobei die Stromquelle (5, 5a, 5b) dazu konfiguriert ist:
o einen reduzierten Strom (iᵣₑₚ) abzugeben und den Verstärker (4) in einem ersten Betriebszustand während einer ersten Periode mit Strom zu versorgen oder den Verstärker (4) während der ersten Periode nicht mit Strom versorgen,
o einen Nennstrom (iₙₒₘ) abzugeben und den Verstärker (4) in einem zweiten Betriebszustand während einer zweiten Periode nach der ersten Periode mit Strom zu versorgen, wobei der Wert des reduzierten Stroms (iᵣₑₚ) kleiner als der Wert des Nennstroms (iₙₒₘ) und eventuell null ist,
wobei die Abtastvorrichtung **dadurch gekennzeichnet ist, dass** ein Schalter (7) während der ersten Periode den ersten Eingangsanschluss mit dem zweiten Eingangsanschluss des Verstärkers (4) kurzschließt und die Quelle (6) der Bezugsspannung (V_{ref}) einen Strom anlegt, der den zweiten Anschluss des Abtastkondensators (4) lädt, und dadurch, dass der Schalter (7) sich während der zweiten Periode im Sperrzustand befindet.

2. Abtastvorrichtung nach Anspruch 1, **dadurch gekennzeichnet, dass** die Stromquelle (5) gebildet ist aus:
- einer ersten Stromquelle (5a), die dazu konfiguriert ist, den reduzierten Strom (iᵣₑₚ) abzugeben und den Verstärker (4) im ersten Betriebszustand mit Strom zu versorgen, wobei der Verstärker (4) nur durch die erste Stromquelle mit Strom versorgt wird,
- einer zweiten Stromquelle (5b), die dazu konfiguriert ist, den Nennstrom (iₙₒₘ) abzugeben und den Verstärker (4) im zweiten Betriebszustand mit Strom zu versorgen, wobei der Verstärker (4) nur durch die zweite Stromquelle (5b) mit Strom versorgt wird.

3. Abtastvorrichtung nach Anspruch 1, **dadurch gekennzeichnet, dass** die Stromquelle (5) gebildet ist aus:
- einer ersten Stromquelle (5a), die dazu konfiguriert ist, den reduzierten Strom (iᵣₑₚ) abzugeben und den Verstärker (4) im ersten Betriebszustand mit Strom zu versorgen, wobei der Verstärker (4) nur durch die erste Stromquelle (5a) mit Strom versorgt wird,
- einer zweiten Stromquelle (5b), die dazu konfiguriert ist, den Nennstrom (iₙₒₘ) abzugeben und den Verstärker (4) im zweiten Betriebszustand mit Strom zu versorgen, wobei der Verstärker (4) durch die zweite Stromquelle (5b) und durch die erste Stromquelle (5a) mit Strom versorgt wird.

4. Abtastvorrichtung nach einem der Ansprüche 1 bis 3, **dadurch gekennzeichnet, dass** die erste Stromquelle (5a) dazu konfiguriert ist, einen reduzierten Strom (iᵣₑₚ) abzugeben, der weniger als die Hälfte des durch die zweite Stromquelle (5b) abgegebenen Nennstroms (iₙₒₘ) ausmacht.

5. Abtastvorrichtung nach Anspruch 1, **dadurch gekennzeichnet, dass** die Stromquelle (5) dazu konfiguriert ist, den Verstärker (4) mindestens während eines Teils der ersten Periode nicht mit Strom zu versorgen, wobei die Stromquelle (5) durch einen im Sperrzustand befindlichen Schalter (7) vom Verstärker (4) getrennt wird.

6. Abtastvorrichtung nach einem der vorherigen Ansprüche, **dadurch gekennzeichnet, dass** die Stromquelle (5) dazu konfiguriert ist, eine erste Periode zu haben, deren Dauer mindestens der Dauer der zweiten Periode entspricht.

7. Abtastvorrichtung nach dem vorherigen Anspruch, **dadurch gekennzeichnet, dass** die Stromquelle (5) dazu konfiguriert ist, eine erste Periode zu haben, deren Dauer mindestens dem Zweifachen der Dauer der zweiten Periode entspricht.

8. Analog-Digital-Wandler (3), umfassend:
- eine Abtastvorrichtung nach einem der vorherigen Ansprüche, deren erster Eingang zum Empfangen der abzutastenden Spannung (Vᵢₙ) durch den ersten Anschluss des Abtastkondensators (C_{ech}) gebildet wird.

9. Verfahren zum Abtasten einer Spannung, umfassend:
- Bereitstellen einer abzutastenden Spannung (Vᵢₙ) an einem ersten Anschluss eines Abtastkondensators (C_{ech}), wobei der Abtastkondensator (C_{ech}) einen zweiten Anschluss aufweist, der mit einem ersten Eingangsanschluss eines Verstärkers (4) verbunden ist, wobei der Verstärker (4) einen zweiten Eingangsanschluss aufweist, der eine Bezugsspannung (V_{ref}) empfängt,
- Abtasten der abzutastenden Spannung (Vᵢₙ) während eines Abtastschritts
wobei der Abtastschritt aufeinanderfolgend umfasst:
- eine erste Abtastperiode, in welcher der Verstärker (4) mit einem reduzierten Strom (iᵣₑₚ) versorgt wird, sodass der Verstärker (4) in einem ersten Betriebszustand arbeitet,
- eine zweite Abtastperiode, in welcher der Verstärker (4) mit einem Nennstrom (iₙₒₘ) versorgt wird, sodass der Verstärker in einem zweiten Betriebszustand arbeitet, wobei der Wert des reduzierten Stroms (iᵣₑₚ) kleiner als der Wert des Nennstroms (iₙₒₘ) ist,
**dadurch gekennzeichnet, dass** der erste Eingangsanschluss und der zweite Eingangsanschluss des Verstärkers (4) während der ersten Abtastperiode durch einen Schalter (7) kurzgeschlossen werden, sodass die Quelle (6) der Bezugsspannung (V_{ref}) einen Strom anlegt, der den Abtastkondensator (4) lädt, und dadurch, dass der Schalter (7) sich während der zweiten Periode im Sperrzustand befindet, sodass der Abtastkondensator (C_{ech}) einen Strom vom ersten Eingangsanschluss des Verstärkers (4) empfängt.

10. Abtastverfahren nach dem vorherigen Anspruch, wobei der Verstärker (4) während der ersten Abtastperiode nur durch eine erste Stromquelle (5a) mit Strom versorgt wird und der Verstärker (4) während der zweiten Abtastperiode nur durch eine zweite Stromquelle (5b) mit Strom versorgt wird.

11. Abtastverfahren nach Anspruch 9, wobei der Verstärker (4) während der ersten Abtastperiode nur durch eine erste Stromquelle (5a) mit Strom versorgt wird und der Verstärker (4) während der zweiten Abtastperiode durch eine zweite Stromquelle (5b) und durch die erste Stromquelle (5a) mit Strom versorgt wird.

12. Abtastverfahren nach Anspruch 9, wobei der Verstärker (4) mindestens während eines Teils der ersten Abtastperiode nicht mit Strom versorgt wird.

## Claims

1. Sampling device comprising:
- a sampling capacitor (C_{ech}) having a first terminal forming a first input of the sampling device designed to receive a signal to be sampled, and a second terminal,
- an amplifier (4) having a first input terminal connected to the second terminal of the sampling capacitor (C_{ech}) so as to sample the voltage at the terminals of the sampling capacitor (C_{ech}) with respect to a reference, and a second input terminal connected to a source (6) of reference voltage (V_{ref}),
- a current source (5, 5a, 5b) supplying the amplifier (4), the current source (5, 5a, 5b) being configured to:
o deliver a reduced current (iᵣₑₚ) and supply the amplifier (4) in a first operating condition during a first period or not supply the amplifier (4) during the first period,
o deliver a rated current (iₙₒₘ) and supply the amplifier (4) in a second operating condition during a second period subsequent to the first period, the value of the reduced current (iᵣₑₚ) being lower than the value of the rated current (iₙₒₘ) and possibly even zero,
sampling device **characterised in that**, during the first period, a switch (7) short-circuits the first input terminal with the second input terminal of the amplifier (4) and the source (6) of reference voltage (V_{ref}) applies a current charging the second terminal of the sampling capacitor (C_{ech}) and **in that**, during the second period, the switch (7) is in blocking state.

2. Sampling device according to claim 1, **characterised in that** the current source (5) is formed by:
- a first power source (5a) configured to deliver the reduced current (iᵣₑₚ) and to supply the amplifier (4) in the first operating condition, the amplifier (4) being supplied by the first power source (5a) only,
- a second power source (5b) configured to deliver the rated current (iₙₒₘ) and to supply the amplifier (4) in the second operating condition, the amplifier (4) being supplied by the second source power source (5b) only.

3. Sampling device according to claim 1, **characterised in that** the current source (5) is formed by:
- a first power source (5a) configured to deliver the reduced current (iᵣₑₚ) and to supply the amplifier (4) in the first operating condition, the amplifier (4) being supplied by the first power source (5a) only,
- a second power source (5b) configured to deliver the rated current (iₙₒₘ) and to supply the amplifier (4) in the second operating condition, the amplifier (4) being supplied by the second power source (5b) and by the first power source (5a).

4. Sampling device according to any one of claims 1 to 3, **characterised in that** the first power source (5a) is configured to deliver a reduced current (iᵣₑₚ) representing less than half the rated current (iₙₒₘ) delivered by the second power source (5b).

5. Sampling device according to claim 1, **characterised in that** the current source (5) is configured not to supply the amplifier (4) during at least a part of the first period, the current source (5) being separated from the amplifier (4) by the switch (7) in blocking state.

6. Sampling device according to one of the foregoing claims, **characterised in that** the current source (5) is configured to have a first period having a duration at least equal to the duration of the second period.

7. Sampling device according to the foregoing claim, **characterised in that** the current source (5) is configured to have a first period having a duration at least equal to twice the duration of the second period.

8. Analog-to-digital converter (3) comprising:
- a sampling device according to any one of the foregoing claims whose first input, designed to receive the voltage to be sampled (Vin), is formed by the first terminal of the sampling capacitor (C_{ech}).

9. Sampling method of a voltage comprising:
- providing a voltage to be sampled (Vᵢₙ) on a first terminal of a sampling capacitor (C_{ech}), the sampling capacitor (C_{ech}) having a second terminal connected to a first input terminal of an amplifier (4), the amplifier (4) having a second input terminal receiving a reference voltage (V_{ref}),
- sampling the voltage to be sampled (Vᵢₙ) during a sampling step, wherein the sampling step successively comprises:
- a first sampling period during which the amplifier (4) is supplied with a reduced current (iᵣₑₚ) so that the amplifier (4) operates in a first operating condition,
- a second sampling period during which the amplifier (4) is supplied with a rated current (iₙₒₘ) so that the amplifier operates in a second operating condition, the value of the reduced current (iᵣₑₚ) being lower than the value of the rated current (iₙₒₘ),
**characterised in that** during the first sampling period, the first input terminal and the second input terminal of the amplifier (4) are short-circuited by a switch (7) so that a source (6) of reference voltage (V_{ref}) applies a current charging the sampling capacitor (4) and **in that** during the second sampling period, the switch (7) is in blocking state so that the sampling capacitor (C_{ech}) receives a current from the first input terminal of the amplifier (4).

10. Sampling method according to the preceding claim wherein the amplifier (4) is supplied only by a first current source (5a) during the first sampling period and the amplifier (4) is supplied only by a second current source (5b) during the second sampling period.

11. Sampling method according to claim 9 wherein the amplifier (4) is supplied only by a first current source (5a) during the first sampling period and the amplifier (4) is supplied by a second current source (5b) and by the first current source (5a) during the second sampling period.

12. Sampling method according to claim 9 wherein the amplifier (4) is not supplied during at least a part of the first sampling period.
